# EUROPEAN PATENT SPECIFICATION

(11) **EP 1 298 982 B1**
(45) Date of publication and mention of the grant of the patent: **23.08.2006**
(21) Application number: 01943966.0
(22) Date of filing: 18.06.2001
(51) Int. Cl.: A01J 9/04

(54) **MILKING DEVICE AND METHOD FOR AUTOMATICALLY MILKING ANIMALS**
MELKVORRICHTUNG UND VERFAHREN ZUM AUTOMATISCHEN MELKEN VON TIEREN
DISPOSITIF DE TRAITE ET PROCEDE DE TRAITE AUTOMATIQUE

(30) Priority: 27.06.2000 NL 1015539
(43) Date of publication of application: 09.04.2003
(73) Proprietor: PROLION B.V., 2140 AA Vijfhuizen (NL)
(72) Inventor: DESSING, Jacobus, Petrus, Maria, NL-2134 EM Hoofddorp (NL)
(74) Representative: Uittenbogaart, Gustaaf Adolf
(86) International application number: PCT/NL2001/000455
(87) International publication number: WO 2002/000012

(56) References cited:
- EP-A- 0 093 646
- EP-A- 0 797 915
- US-A- 4 932 222
- US-A- 5 275 124

## Description

The invention relates to a milking device as described in the preamble of claim 1. A milking device of this type is known from US 4,932,222, Adam. The drawback of the known device is that the cooling liquid has to be pumped around the milk line, with the result that unnecessary energy is imparted to the cooling liquid, and consequently additional cooling is required.

To avoid this drawback, the device is designed as described in the characterizing clause of claim 1. As a result, during use the milk line is surrounded by cooling liquid without having to supply additional energy, while during its internal cleaning the milk line is surrounded by air, so that the washing liquid is not cooled.

According to one refinement, the device is designed as described in claim 2. As a result, all the milk which has been collected from a cow can remain in the milk cooler for a certain time in order to cool. Consequently, it is easy to cool the milk to the storage temperature.

According to one refinement, the device is designed as described in claim 3. This prevents material from being deposited on the inner side of the wall in the milk cooler, so that this wall is easier to clean.

According to one refinement, the device is designed as described in claim 4. This makes it easy to empty the milk cooler.

According to one refinement, the device is designed as described in claim 5. This makes the milk cooler of simple design.

According to one refinement, the device is designed as described in claim 6. This further simplifies the internal cleaning of the milk line while ensuring uniform cooling of the milk.

The invention also comprises a method as described in claim 7. This has the result that, before being stored in the milk tank, the milk remains in the milk cooler for a certain time for cooling purposes.

According to one refinement, the method is carried out as described in claim 8. This ensures that the milk is sufficiently cooled.

The invention is explained below with reference to a number of exemplary embodiments and with the aid of a drawing, in which:
Figure 1 shows a diagrammatic cross section through a milk cooler, and
Figure 2 shows a circuit diagram of the lines running between the various components of a milking device.

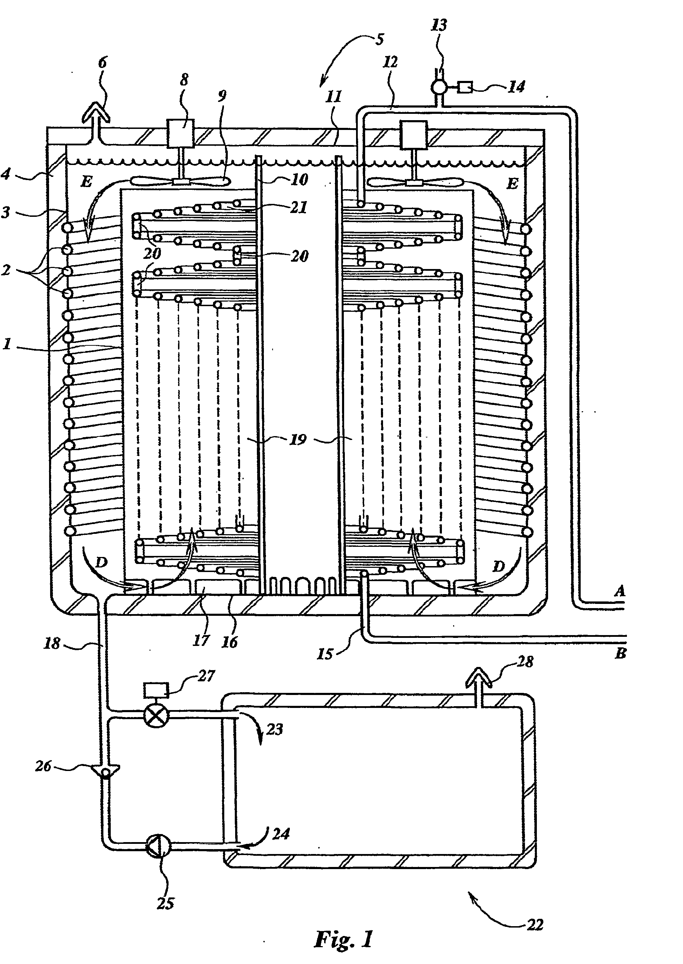

Figure 1 shows a cooling unit 5 for cooling milk. The cooling unit 5 comprises a cylindrical shell 3 with a base 16 and an upper wall 11, which may be removable if appropriate. Insulation 4 is fitted around the outer shell 3, the base 16 and the upper wall 11. In the outer shell 3 there is an evaporator 2 for cooling the cooling liquid which is present in the cooling unit 5.

A bundle of lines 19 are positioned inside the cooling unit 5. The bundle of lines 19 is arranged around a supporting pipe 10 and comprises an uninterrupted tube of constant cross section. The tube is coupled to a feed line 12 and is wound in a coil 21 from the support pipe 10 to the outer diameter. The coil 21 runs downwards on a slope in a descending plane and comprises, for example, 6 windings. At the outer diameter, the coil 21, via a connection 20, runs through to the next coil 21, which runs towards the support pipe 10 and likewise runs downwards on a slope and, on the inner side, is in turn connected, via a connection 20, to the next coil 21. This structure is repeated a number of times, and the line runs downwards on a slope without interruption, ending at an outlet line 15, where the line leaves the cooling unit 5. The coils 21 are attached in a known way to the support pipe 10. The support pipe 10 stands on the base 16.

Around the bundle of lines 19 there is a guide plate 1 with openings 17 at the bottom. During use, the cooling unit 5 is filled with a cooling liquid, such as for example "Pekasol". The cooling liquid must be suitable to transfer heat from the bundle of lines 19 to the evaporator 2. If water is used, it will be possible for a layer of ice to form around the evaporator 2, this ice forming, as it were, a cold buffer but also impeding the transfer of heat to the evaporator 2. By using a liquid which does not freeze, such as "Pekasol", and also does not form ice on the evaporator 2, it is possible for the evaporator 2 to reach a temperature which lies below the freezing point of the milk when the cooling liquid is at a temperature of 0° - 2°C. The milk will not freeze at this temperature yet the surface area of the evaporator 2 can remain limited. The level of the cooling liquid lies above the guide plate 1 extending approximately to the top of the outer shell 3. One or more agitators 9, which are driven by an agitator motor 8, are positioned above the bundle of lines 19. A coolant is expanded in the outer shell 3, specifically in the evaporator 2, with the result that the outer shell becomes very cold and the liquid in the cooling unit 5 is cooled. As a result, and on account of the agitators 9, a flow which rises upward through the bundle of lines 19 and runs downward along the evaporator 2 is formed in the cooling unit 5.

The liquid which is to be cooled, such as milk, reaches the feed line 12 into the cooling unit 5 at a temperature of approximately 38°C, is cooled to the temperature of the cooling liquid and emerges from the cooling unit 5 at the outlet line 15 at this temperature.

The evaporator 2 is provided, in a known way, with a thermostatically controlled valve which ensures that, through evaporation of coolant, the liquid which circulates in the cooling unit 5 is kept at a temperature of approximately 0°C. Consequently, the milk, when it leaves the cooling unit 5 via the outlet line 15, is also at a temperature of approximately 0°C.

The dimensions of the bundle of lines 19 are such that the volume of the milk which is present in the bundle of lines corresponds to the maximum amount of milk which is to be yielded by one cow is one milking session. This means that the internal volume of the bundle of lines 19 corresponds, for example, to 15 liters, which means that, if the milk tube has an internal diameter of 12 mm, the tube length of the bundle of lines 19 is 150 m. If the external diameter of the coil 21 of the bundle of lines 19 is approximately 500 mm and the support pipe 10 has a diameter of 100 mm, it is possible to make approximately 6 windings per coil 21, so that approximately twenty-five coils 21 are required and the total bundle of lines 19 has a height of approximately 1 m. In another embodiment, in which the bundle of lines 19 is designed with a tube with an internal diameter of 18 mm, a tube length of 65 m is required and the height of the bundle of lines 19 is approximately 650 mm. The lines through which the milk flows are preferably made from thin-walled stainless steel.

At A, the milk flows into the cooling unit 5 and passes through the bundle of lines 19 via the feed line 12. The milk leaves the cooling unit 5 via the outlet line 15 at B. To empty the bundle of lines 19, a valve 14 with an air inlet 13 is provided at the top of the cooling unit 5. When the valve 14 is opened, air flows into the milk line and the bundle of lines 19 can empty.

During cleaning of the milk line, hot washing liquid is flushed through the milk line. To prevent all the cooling liquid which is present in the cooling unit 5 from having to be heated, so that the washing liquid is unnecessarily cooled, it is provided that the cooling liquid can run out of the cooling unit 5 via an outlet 18 and a valve 27 to an inlet 23 of an insulated vessel 22. There is a vent 28 in the insulated vessel 22. When the cooling unit 5 is to be returned to use after the milk line has been cleaned, the cooling liquid, after the valve 27 has been closed, is pumped out of the vessel 22 back into the cooling unit 5 via a non-return valve 26 and the outlet 18, using a pump 25. After the cooling liquid has been allowed to run out of the cooling unit 5, hot washing liquid is flushed through the milk line, during which process the milk line can heat up to the temperature of this liquid, for example 50°C, while no energy is lost through unnecessary heating and cooling of the cooling liquid. After the cleaning, the cooling liquid is returned to the cooling unit 5 and the milk line is cooled back to approximately 0°C.

The fact that the bundle of lines 19 is designed as an uninterrupted line of constant cross section allows it to be cleaned by pumping an elastic object, such as a foamed plastic ball, with the washing liquid which circulates through the line. This ball exerts a gently rubbing or scraping action on the inner side of the line, so that deposits or undesired growth of bacteria are removed. In this case, the installation is provided with means (not shown) for introducing the ball into the line and for removing it again.

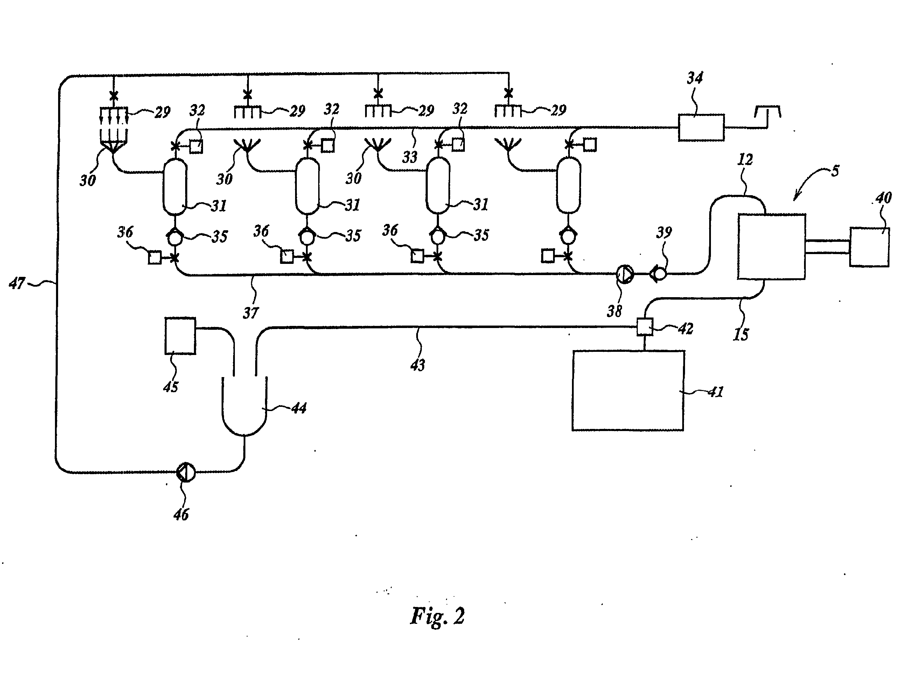

Figure 2 diagrammatically depicts an exemplary embodiment of a milking device in which the cooling unit 5 is used. The milking device comprises four milking stalls, each with a set of milking cups 30 which are connected, in a known way, to a milk vessel 31. During the milking, a vacuum is applied in the milk vessel 31 by opening a valve 32, so that the milk vessel is connected to a vacuum line 33 which is connected to a vacuum pump 34. After the milking has ended, the cow which has been milked will leave the milking stall and the milk is pumped out of the milk vessel 31 to a tank 41, for storage until the milk is collected by a milk tanker. Before the milk is stored in the milk tank 41, this milk, which is at a temperature of approximately 38 to 39°C in the milk vessel 31, is cooled to a temperature of approximately 0 to 2°C in the cooling unit 5.

After the milking cups 30 have been removed, the valve 32 is closed and the valve 36 is opened, and the pump 38 is started, so that the milk flows via the non-return valve 35, the valve 36 and the collection line 37 to a pump 38. The pump 38 pumps the milk into the cooling unit 5 via a non-return valve 39. Since the volume of the bundle of lines 19 in the cooling unit 5 is greater than the volume of the milk collected in the milk vessel 31, all the milk remains in the cooling unit 5 after it has been pumped through the pump 38. After the milk has remained in the cooling unit 5 for a variable time of, for example, at least 60 seconds, and preferably 90 seconds, it has been sufficiently cooled. After this variable time has ended, the milk from a following milking stall can be pumped to the cooling unit 5. In the situation in which the time required for cooling the milk is approximately 90 seconds, it is on average possible, when using four milking stalls, for the milk from a milk vessel 31 to be pumped to the cooling unit 5 every 6 minutes. The milking device is controlled in such a manner that the milk can remain in the cooling unit 5 for approximately 90 seconds each time and that the entire contents of the milk vessels 31 are successively pumped into the cooling unit 5.

The cooling unit 5 is provided in a known way with a cooling installation 40, which comprises, for example, a compressor and a condenser. The condenser may, if appropriate, be air-cooled or water-cooled. Milk quantity meters, as well as filters and the like, may be incorporated in a known way in the line between the milk vessels 31 and the cooling unit 5.

To periodically clean the system, the milking cups 30 are connected to sprayers 29, which are provided with washing water via a flushing line 47 and a flushing pump 46. A flushing vessel 44 is filled with hot water via a hot-water source. If appropriate, detergents are added to the water. The temperature of the washing water is, for example, approximately 50°C. The washing water is sprayed into the milking cups 30 via the sprayers 29 and flows to a flushing port 42 via the collection line 37 and the cooling unit 5. The flushing port 42 is designed in such a manner that, during the milking, the milk flows out of line 15 into the milk tank 41. During cleaning, there is a sealed connection between the line 15 and the flushing line 43. An example of a connection of this type is described in patent application NL 1012552, in the name of the same applicant. To prevent the flushing water in the cooling unit 5 from cooling excessively, the cooling liquid is removed from the cooling unit 5 in the manner described above. Also, the bundle of lines 19 is emptied first, in the manner described above, so that no milk remains therein.

The drawing shows that one set of milking cups 30 is cleaned via sprayers 29, but it is obvious that there are features which also allow the other milking cups 30 to be cleaned by means of sprayers. If appropriate, it is in this case possible for all the milking systems to be cleaned simultaneously, but also for each system to be cleaned separately while milking can continue uninterrupted in the other milking systems.

## Claims

1. A milking device comprising milking stalls for automatically milking animals, with in each milking stall a milk vessel (31) for collecting milk, means (38) for pumping the milk which has been collected in a milk vessel (31) through a milk line (12,15,19) to a milk tank (41), cleaning means (29,46) for internal cleaning the milk line and a milk cooler (5) for cooling milk which has been collected in the milk vessel, the milk cooler comprising a first vessel (3,11,16) fillable with cooling liquid and enclosing a bundle of lines (19) which are part of the milk line, the bundle of lines being cooled by a cooling liquid and an evaporator (10) for cooling the cooling liquid, **characterised in that** the milk cooler is provided with a second vessel (22) for storing the cooling liquid during the internal cleaning of the bundle of lines (19).

2. The milking device as claimed in claim 1, **characterized in that** the internal volume of the bundle of lines (19) cooled by the cooling liquid is greater than the volume of the maximum amount of milk which is to be collected from a cow in a milk vessel (31).

3. The milking device as claimed in claim 1 or 2, **characterized in that** the bundle of lines (19) is shaped such that the milk line (19) follows a continuous slope in the milk cooler (5).

4. The milking device as claimed in claim 3, **characterized in that** the milk line (12) is provided, at the highest point of the milk cooler (5), with a switchable air inlet (13).

5. The milking device as claimed in one of the preceding claims, **characterized in that** the evaporator (2) forms part of a wall (3) of the first vessel.

6. The milk line as set forth in one of the preceding claims, **characterized in that** the bundle of lines (19) in the milk cooler (5) has a cross section which is more of less constant.

7. The milking device as claimed in one of the preceding claims, **characterized in that** the first vessel (3,11,16) and the second vessel (22) are connected by an outlet (18) with a pump (25) and valves (26,27).

8. The milking device as claimed in one of the preceding claims, **characterized in that** the second vessel (22) is insulated.

## Patentansprüche

1. Melkvorrichtung, mit Melkboxen zum automatischen Melken von Tieren, ferner mit einem Milchbehälter (31) in jeder Melkbox, um Milch zu sammeln, sowie mit Mitteln (38), um die in einem Milchbehälter (31) gesammelte Milch durch eine Milchleitung (12, 15, 19) in einen Milchtank (41) zu pumpen, mit Reinigungsmitteln (29, 46) zur internen Reinigung der Milchleitung (12, 15, 19), und mit einem Milchkühler (5) zum Kühlen der in dem Milchbehälter (31) gesammelten Milch, wobei der Milchkühler (5) einen ersten mit einer Kühlflüssigkeit füllbaren Behälter (3, 11, 16) aufweist und ein Leitungsbündel (19) als Bestandteil der Milchleitung (12, 15, 19) beinhaltet, wobei das Leitungsbündel (19) durch eine Kühlflüssigkeit und einen Verdampfer (2) zum Kühlen der Kühlflüssigkeit gekühlt wird, **dadurch gekennzeichnet, dass** der Milchkühler (5) mit einem zweiten Behälter (22) ausgerüstet ist, um die Kühlflüssigkeit während der internen Reinigung des Leitungsbündels (19) zu bevorraten.

2. Melkvorrichtung nach Anspruch 1, **dadurch gekennzeichnet, dass** das Innenvolumen des durch die Kühlflüssigkeit gekühlten Leitungsbündels (19) größer als die maximale Menge an Milch ist, die von einer Kuh in dem Milchbehälter (31) gesammelt wird.

3. Melkvorrichtung nach Anspruch 1 oder 2, **dadurch gekennzeichnet, dass** das Leitungsbündel (19) eine Form der Gestalt aufweist, dass die Milchleitung (12, 15, 19) einem konstanten Verlauf im Milchkühler (5) folgt.

4. Melkvorrichtung nach Anspruch 3, **dadurch gekennzeichnet, dass** die Milchleitung (12, 15, 19) am höchsten Punkt des Milchkühlers (5) mit einem schaltbaren Lufteinlass (13) ausgerüstet ist.

5. Melkvorrichtung nach einem der vorstehenden Ansprüche, **dadurch gekennzeichnet, dass** der Verdampfer (2) einen Teil einer Wand (3) des ersten Behälters (3, 11, 16) bildet.

6. Melkvorrichtung nach einem der vorhergehenden Ansprüche, **dadurch gekennzeichnet, dass** das Leitungsbündel (19) in dem Milchkühler (5) mit einem mehr oder weniger konstanten Querschnitt ausgerüstet ist.

7. Melkvorrichtung nach einem der vorangestellten Ansprüche, **dadurch gekennzeichnet, dass** der erste Behälter (3, 11, 16) und der zweite Behälter (22) durch einen Auslass (18) mit einer Pumpe (25) und Ventilen (26, 27) miteinander verbunden sind.

8. Melkvorrichtung nach einem der vorherigen Ansprüche, **dadurch gekennzeichnet, dass** der zweite Behälter (22) isoliert ist.

## Revendications

1. Dispositif de traite comprenant des stalles de traite pour la traite automatique d'animaux avec, dans chaque stalle de traite, un récipient de lait (31) pour recueillir le lait, des moyens (38) pour pomper le lait qui a été recueilli dans un récipient de lait (31) par l'intermédiaire d'une conduite de lait (12, 15, 19) vers un réservoir de lait (41), des moyens de nettoyage (29, 46) pour le nettoyage interne de la conduite de lait et un refroidisseur de lait (5) pour refroidir le lait qui a été recueilli dans le récipient de lait, le refroidisseur de lait comprenant un premier récipient (3, 11, 16) pouvant être rempli d'un liquide réfrigérant et renfermant un faisceau de conduites (19) qui font partie de la conduite de lait, le faisceau de conduites étant refroidi par un liquide réfrigérant, et un évaporateur (10) pour refroidir le liquide réfrigérant, **caractérisé en ce que** le refroidisseur de lait est muni d'un second récipient (22) pour stocker le liquide de refroidissement pendant le nettoyage interne du faisceau de conduites (19).

2. Dispositif de traite selon la revendication 1, **caractérisé en ce que** le volume interne du faisceau de conduites (19) refroidi par le liquide réfrigérant est supérieur au volume de la quantité maximum de lait qui doit être recueillie à partir d'une vache dans un récipient de lait (31).

3. Dispositif de traite selon la revendication 1 ou 2, **caractérisé en ce que** le faisceau de conduites (19) présente une forme telle que la conduite de lait (19) suit une pente continue dans le refroidisseur de lait (5).

4. Dispositif de traite selon la revendication 3, **caractérisé en ce que** la conduite de lait (12) est munie, sur le point supérieur du refroidisseur de lait (5), d'une entrée d'air commutable (13).

5. Dispositif de traite selon l'une des revendications précédentes, **caractérisé en ce que** l'évaporateur (2) fait partie d'une paroi (3) du premier récipient.

6. Conduite de traite telle que définie dans l'une des revendications précédentes, **caractérisée en ce que** le faisceau de conduites (19) dans le refroidisseur de lait (5) présente une section transversale qui est plus ou moins constante.

7. Dispositif de traite selon l'une des revendications précédentes, **caractérisé en ce que** le premier récipient (3, 11, 16) et le second récipient (22) sont raccordés par une sortie (18) avec une pompe (25) et des soupapes (26, 27).

8. Dispositif de traite selon l'une des revendications précédentes, **caractérisé en ce que** le second récipient (22) est isolé.
